# EUROPEAN PATENT SPECIFICATION

(11) **EP 0 992 542 B1**
(45) Date of publication and mention of the grant of the patent: **03.09.2003**
(21) Application number: 98929676.9
(22) Date of filing: 24.06.1998
(51) Int. Cl.: C08L 69/00, C08L 67/00, C08K 5/521, C08K 3/34

(54) **FLAME-RETARDANT THERMOPLASTIC RESIN COMPOSITION**
FLAMMHEMMENDE THERMOPLASTISCHE HARZZUSAMMENSETZUNG
COMPOSITION IGNIFUGE DE RESINE THERMOPLASTIQUE

(30) Priority: 27.06.1997 JP 17192397
(43) Date of publication of application: 12.04.2000
(73) Proprietor: KANEKA CORPORATION, Osaka-shi, Osaka 530-8288 (JP)
(72) Inventor: MATSUMOTO, Kazuaki, Yao-shi Osaka 581-0041 (JP)
(74) Representative: VOSSIUS & PARTNER
(86) International application number: JP9802834
(87) International publication number: WO99000456

(56) References cited:
- JP-A- 3 091 528
- JP-A- 5 179 123
- JP-A- 8 319 406
- JP-A- 51 144 452

## Description

### TECHNICAL FIELD

The present invention relates to a thermoplastic resin composition to which a flame retardancy is imparted with compounds other than chlorine or bromine-containing compounds, and more particularly to a flame retarded thermoplastic resin composition which is excellent in impact resistance, solvent resistance, wet heat resistance, molding processability and heat stability, and which exhibits a higher flame resistance than conventionally known compositions.

### BACKGROUND ART

Polycarbonate resin/thermoplastic polyester resin alloys have excellent characteristics in that the fluidity and solvent resistance of polycarbonate resins are improved and the impact resistance and heat resistance of thermoplastic polyester resins are improved, but compositions containing such alloys have a problem that in general the impact resistance thereof is on a low level.

In Japanese Patent Publication Kokai No. 49-41442, it is proposed to improve the impact resistance by adding a butadiene rubber-based graft copolymer to a polymer alloy of a polycarbonate resin and a thermoplastic polyester resin. However, the addition of such grafted rubber raises a problem that since the heat stability is lowered, molding failure such as discoloration and generation of flash are easy to occur when processed at high temperatures.

Japanese Patent Publication Kokai No. 51-144452 discloses an improvement of the impact resistance without adding a grafted rubber wherein copolymers such as an ethylene/alkyl (meth)acrylate/ glycidyl (meth)acrylate copolymer are added to a resin selected from a polycarbonate resin and a polyalkylene terephthalate resin. This proposal can improve the impact resistance without lowering the heat stability. However, since the obtained composition is extremely lowered in fluidity, molding processing thereof is very difficult and is substantially impossible.

Recently, there are many cases, particularly in uses of electric and electronic parts, where a high flame resistance coming up to a V-0 rating of UL-94 (Underwriters' Laboratory flammability test) or the like is demanded for resins used, in order to secure a safety against fire. In order to accomodate the demands, it is required to impart a flame retardancy to resin compositions. On the other hand, from the viewpoint of increasing interest in environmental problem with the European countries as the center figure, there have been demanded resin compositions which can exhibit such a high flame resistance without utilizing chlorine and bromine.

Use of phosphorus based flame retarders has been diversely investigated as a technique for imparting such a high flame resistance to resin compositions without including chlorine or bromine thereto. For instance, Japanese Patent Publication Kokai No. 64-70555 discloses incorporating a graft copolymer, a monophosphate flame retarder and a fluorinated polyolefin to a resin composition composed of a polycarbonate resin and a polyalkylene terephthalate resin. Japanese Patent Publication Kokai No. 6-192553 discloses incorporating a graft copolymer, an oligomeric phosphate flame retarder and a fluorinated polyolefin to a resin composition composed of a polycarbonate resin and a polyalkylene terephthalate resin.

However, incorporation of phosphorus based flame retarders into such polycarbonate/thermoplastic polyester alloys causes a problem that impact resistance, solvent resistance and wet heat resistance are all remarkably lowered. In the compositions disclosed in the above publications, a graft copolymer is incorporated to improve the impact resistance, but use of phosphates in combination with the graft copolymer tends to remarkably lower the heat stability. Also, since lowering of the solvent resistance and the wet heat resistance caused by the incorporation of phosphates cannot be compensated in such resin compositions, the solvent resistance and the wet heat resistance are remarkably lowered.

It is an object of the present invention to provide a thermoplastic resin composition which is flame-retarded on a high level without containing a halogen atom and which are excellent in impact resistance, solvent resistance, wet heat resistance, molding processability and heat stability.

A further object of the present invention is to provide a resin composition such that the impact resistance, heat stability, solvent resistance, wet heat resistance and molding processability of flame retarded resin compositions comprising polycarbonate/thermoplastic polyester alloys and organic phosphorus based flame retarders are improved, and it exhibits a higher degree of flame resistance as compared with conventionally known compositions.

### DISCLOSURE OF THE INVENTION

The present inventors have made an intensive study in order to solve the problems as mentioned above. As a result, the present inventors have found that when an olefin/alkyl (meth)acrylate/glycidyl (meth)acrylate copolymer is added to a flame retarded resin composition comprising a polycarbonate resin, a thermoplastic polyester resin and an organic phosphorus based flame retarder, the impact resistance, solvent resistance, wet heat resistance, heat stability and the like are greatly improved, and the molding processability can be improved by combination use of the organic phosphorus based flame retarder with the above-mentioned copolymer to a great degree as compared with the case of using the copolymer alone, so resin compositions, which have a good molding processability and accordingly can be practically used, are obtained.

Accordingly, the present invention provides a flame retarded thermoplastic resin composition comprising:
a thermoplastic resin comprising (A) a polycarbonate resin and (B) a thermoplastic polyester resin in an (A)/(B) ratio of 99/1 to 50/50 by weight,
(C) 0.1 to 30 parts by weight of an organic phosphorus based flame retarder, and
(D) 0.1 to 15 parts by weight of a copolymer comprising units of at least one olefin, units of at least one alkyl (meth)acrylate having a C₁ to C₁₀ alkyl group and units of at least one glycidyl (meth)acrylate, respectively, per 100 parts by weight of said thermoplastic resin.

The flame retarded thermoplastic resin composition of the present invention is excellent in flame resistance and, moreover, has excellent properties such as impact resistance, heat stability, solvent resistance, wet heat resistance and molding processability. The flame resistance of the composition can be further improved by adding to the composition (E) 0.01 to 5 parts by weight of at least one of a fluorine-containing resin and a silicone per 100 parts by weight of the thermoplastic resin. The flame resistance can also be further improved by adding to the composition (F) 0.1 to 100 parts by weight of a silicate compound per 100 parts by weight of the thermoplastic resin.

### BEST MODE FOR CARRYING OUT THE INVENTION

The polycarbonate resin (A) used in the present invention is thermoplastic resins obtained by reacting a phenolic compound having a valency of at least 2 with phosgene or a carbonic acid diester such as diphenyl carbonate.

Examples of dihydric phenol compounds are, for instance, a dihydroxydiarylalkane such as 2, 2-bis(4-hydroxyphenyl)propane (common name bisphenol A), bis(4-hydroxyphenyl)methane, bis(4-hydroxyphenyl)-phenylmethane, bis(4-hydroxyphenyl)naphthylmethane, bis(4-hydroxyphenyl)(4-isopropylphenyl)methane, bis-(3,5-dimethyl-4-hydroxyphenyl)methane, 1,1-bis(4-hydroxyphenyl)ethane, 1-naphthyl-1,1-bis(4-hydroxy-phenyl)ethane, 1-phenyl-1,1-bis(4-hydroxyphenyl)ethane, 1,2-bis(4-hydroxyphenyl)ethane, 2-methyl-1,1-bis(4-hydroxyphenyl)propane, 2, 2-bis(3,5-dimethyl-4-hydroxy-phenyl)propane, 1-ethyl-1,1-bis(4-hydroxyphenyl)propane, 2,2-bis(3-methyl-4-hydroxyphenyl)propane, 1,1-bis(4-hydroxyphenyl)butane, 2,2-bis(4-hydroxyphenyl)butane, 1,4-bis( 4-hydroxyphenyl)butane, 2,2-bis(4-hydroxy-phenyl)pentane, 4-methyl-2, 2-bis(4-hydroxyphenyl)pentane, 2, 2-bis(4-hydroxyphenyl)hexane, 4,4-bis(4-hydroxy-phenyl)heptane, 2, 2-bis(4-hydroxyphenyl)nonane, 1,10-bis(4-hydroxyphenyl)decane, or 1,1-bis(4-hydroxy-phenyl)-3, 3, 5-trimethylcyclohexane; a dihydroxy-diarylcycloalkane such as 1,1-bis(4-hydroxy-phenyl)cyclohexane or 1,1-bis(4-hydroxyphenyl)cyclodecane; a dihydroxydiarylsulfone such as bis(4-hydroxyphenyl)-sulfone or bis(3,5-dimethyl-4-hydroxyphenyl)sulfone; a dihydroxydiaryl ether such as bis(4-hydroxyphenyl)ether or bis(3, 5-dimethyl-4-hydroxyphenyl)ether; a dihydroxydiaryl ketone such as 4,4'-dihydroxybenzophenone or 3,3',5,5'-tetramethyl-4,4'-dihydroxybenzophenone; a dihydroxydiarylsulfide such as bis(4-hydroxyphenyl)-sulfide, bis(3-methyl-4-hydroxyphenyl)sulfide or bis(3,5-dimethyl-4-hydroxyphenyl)sulfide; a dihydroxy-diarylsulfoxide such as bis(4-hydroxyphenyl)sulfoxide; a dihydroxydiphenyl such as 4,4'-dihydroxydiphenyl; a dihydroxyarylfluorene such as 9, 9-bis(4-hydroxyphenyl)-fluorene; and the like. Bisphenol A is particularly preferred as the dihydric phenol compound. In addition to the dihydric phenol compounds as mentioned above, there can be used a dihydroxybenzene such as hydroquinone, resorcinol or methylhydroquinone; and a dihydroxynaphthalene such as 1,5-dihydroxynaphthalene or 2, 6-dihydroxynaphthalene. Further, phenolic compounds having a valency of 3 or more can be used so long as the obtained polycarbonate resins maintain a thermoplasticity. The phenol compounds having a valency of 2 or more may be used alone or in admixure thereof.

Examples of the above-mentioned carbonic acid diester are, for instance, a diaryl carbonate such as diphenyl carbonate, a dialkyl carbonate such as dimethyl carbonate or diethyl carbonate, and the like.

The polycarbonate resins (A) may have a branched structure. Examples of a branching agent used for obtaining branched polycarbonate resins are, for instance, phloroglucinol, mellitic acid, trimellitic acid, trimellityl chloride, trimellitic anhydride, gallic acid, n-propyl gallate, protocatechuic acid, pyromellitic acid, pyromellitic acid dianhydride, α-resorcylic acid, β-resorcylic acid, resorcylaldehyde, isatinbis(o-cresol), benzophenonetetracarboxylic acid, tri or more hydric phenol compounds, and the like.

Examples of the tri or more hydric phenol compounds are, for instance, 2,4,4'-trihydroxybenzo-phenone, 2,2',4,4'-tetrahydroxybenzophenone, 2,4,4'-trihydroxyphenylether, 2,2',4,4'-tetrahydroxy-phenylether, 2,4,4'-trihydroxydiphenyl-2-propane, 2,2'-bis(2,4-dihydroxyphenyl)propane, 2,2',4,4'-tetra-hydroxydiphenylmethane, 2,4,4'-trihydroxy-diphenylmethane, 1-[α-methyl-α-(4'-dihydroxyphenyl)ethyl]-3-[α',α'-bis(4"-hydroxyphenyl)-ethyl]benzene, 1-[α-methyl-α-(4'-dihydroxyphenyl)-ethyl]-4-[α',α'-bis(4 "-hydroxyphenyl)ethyl]benzene, α,α',α''-tris(4-hydroxyphenyl)-1,3, 5-triisopropyl-benzene, 2,6-bis(2-hydroxy-5 '-methylbenzyl)-4-methylphenol, 4,6-dimethyl-2,4,6-tris(4'-hydroxyphenyl)-2-heptene, 4,6-dimethyl-2,4,6-tris( 4 '-hydroxyphenyl)-heptane, 1,3,5-tris(4'-hydroxyphenyl)benzene, 1,1,1-tris(4-hydroxyphenyl)ethane, 2,2-bis[4,4-bis(4'-hydroxyphenyl)cyclohexyl]propane, 2,6-bis(2'-hydroxy-5'-isopropylbenzyl)-4-isopropylphenol, bis[ 2-hydroxy-3-(2'-hydroxy-5'-methylbenzyl)-5-methylphenyl]methane, bis-[2-hydroxy-3-(2'-hydroxy-5'-isopropylbenzyl)-5-methyl-phenyl]methane, tetrakis(4-hydroxyphenyl)methane, tris(4-hydroxyphenyl)phenylmethane, 2',4',7-trihydroxyflavan, 2,4,4-trimethyl-2',4',7-trihydroxyflavan, 1,3-bis(2',4'-dihydroxyphenylisopropyl)benzene, tris(4'-hydroxyphenyl)-amyl-s-triazine, and the like.

Also, a polycarbonate-polyorganosiloxane copolymer composed of a polycarbonate portion and a polyorganosiloxane portion may be used as the polycarbonate resin (A). It is preferable that the degree of polymerization of the polyorganosiloxane portion is at least 5.

In addition, it is possible to use, as the polycarbonate resin (A), a copolymer prepared using a linear aliphatic dicarboxylic acid such as adipic acid, pimelic acid, suberic acid, azelaic acid, sebacic acid or decanedicarboxylic acid as a comonomer.

Various known terminating agents can be used in the polymerization for the polycarbonate resin (A). Examples of the terminating agent are, for instance, phenol, p-cresol, p-t-butylphenol, p-t-octylphenol, p-cumylphenol, nonylphenol and other monohydric phenol compounds.

Further, copolymers with phosphorus compounds or polymers terminated with phosphorus compounds can be used as the polycarbonate resin (A) in order to raise the flame resistance. Copolymers with dihydric phenol compounds having benzotriazole group can also be used in order to raise the weatherability.

Typical examples of the polycarbonate resin (A) are, for instance, a polycarbonate resin obtained by reacting bisphenol A with phosgene, a polycarbonate resin obtained by reacting bisphenol A with diphenyl carbonate, a polycarbonate resin obtained by reacting bisphenol S with diphenyl carbonate, and a polycarbonate resin obtained by reacting bisphenolfluorene with diphenyl carbonate. Among them, the polycarbonate resins obtained by reacting bisphenol A with phosgene or diphenyl carbonate are preferably used from the viewpoints of cost and balance in physical properties.

The polycarbonate resins as mentioned above may be used alone or in admixture thereof. In case of combination use of at least 2 resins, how to combine is not limited and, for instance, resins having different monomer units, resins having different molar ratios of monomers and/or resins having different molecular weights can be arbitrarily combined.

The viscosity average molecular weight of the polycarbonate resin (A) used in the present invention is preferably from 10,000 to 60,000, more preferably 15,000 to 45,000, most preferably 18,000 to 35,000. If the viscosity average molecular weight is less than 10,000, the obtained resin compositions are often insufficient in strength and heat resistance, and if the viscosity average molecular weight is more than 60,000, a problem often arises in processability.

The thermoplastic polyester resin (B) used in the present invention is thermoplastic polyester resins obtained by polycondensation of a carboxylic acid component having a valency of at least 2 and an alcohol and/or phenol component having a valency of at least 2 according to known methods.

Bivalent or higher valent aromatic carboxylic acids having 8 to 22 carbon atoms and derivatives thereof capable of forming ester are preferably used as the carboxylic acid component having a valency of at least 2. Examples thereof are, for instance, bivalent aromatic carboxylic acids, e.g., a phthalic acid such as terephthalic acid or isophthalic acid, naphthalenedicarboxylic acid, bis(p-carboxyphenyl)methane, anthracenedicarboxylic acid, 4,4'-diphenylcarboxylic acid, 1, 2-bis(phenoxy)ethane-4,4 '-dicarboxylic acid and diphenylsulfonedicarboxylic acid; trivalent or higher valent aromatic carboxylic acids, e.g., trimesic acid, trimellitic acid and pyromellitic acid; and ester-formable derivatives of them, e.g., alkyl esters, alkali metal salts and halogenides. These may be used alone or in admixture thereof. Terephthalic acid, isophthalic acid and naphthalenedicaboxylic acid are preferred from the viewpoints of easiness in handling, easiness in reaction and good balance in physical properties of the obtained resins.

The alcohol and/or phenol component having a valency of at least 2 includes an aliphatic compound having 2 to 15 carbon atoms, an alicyclic compound having 6 to 20 carbon atoms and an aromatic compound having 6 to 40 carbon atoms, which have at least two hydroxyl groups in the molecule, and derivatives of these compounds capable of forming ester. Examples of the alcohol and/or phenol component are an aliphatic diol such as ethylene glycol, propylene glycol, butanediol, hexanediol, decanediol or neopentyl glycol; an alicyclic diol such as cyclohexanedimethanol, cyclohexanediol or 2,2'-bis(4-hydroxycyclohexyl)propane; an aromatic diol such as 2,2'-bis(4-hydroxyphenyl)propane or hydroquinone; a trihydric or higher hydric alcohol; and ester-formable derivatives thereof such as an alkali metal alkoxide or an alkyl ester. Ethylene glycol, butanediol and cyclohexanedimethanol are preferred from the viewpoints of easiness in handling, easiness in reaction and good balance in physical properties of the obtained resins. These may be used alone or in admixture thereof.

In addition to the above-mentioned acid component and alcohol and/or phenol component, the thermoplastic polyester resin (B) may containe known copolymerizable components copolymerized therein, so long as desired properties are not impaired. The copolymerizable components include a carboxylic acid such as a bivalent or higher valent aliphatic carboxylic acid having 4 to 12 carbon atoms or a bivalent or higher valent alicyclic carboxylic acid having 8 to 15 carbon atoms, and an ester-formable derivative thereof. Examples thereof are a dicarboxylic acid such as adipic acid, sebacic acid, azelaic acid, dodecanedioic acid, maleic acid, 1, 3-cyclohexanedicarboxylic acid or 1,4-cyclohexanedicarboxylic acid, and an ester-formable derivative thereof such as alkyl ester, alkali metal salt and halogenide.

Also, an oxy-acid such as p-hydroxybenzoic acid, its ester-formable derivative, a cyclic ester such as ε-caprolactone can be used as the comonomer. Further, there can be used a thermoplastic polyester resin wherein a polyalkylene glycol segment such as polyethylene glycol, polypropylene glycol, poly(ethylene oxide-propylene oxide) block and/or random copolymer, addition polymerization product of ethylene oxide to bisphenol A, addition polymerization product of propylene oxide to bisphenol A, addition polymerization product of tetrahydrofuran to bisphenol A or polytetramethylene glycol is partly copolymerized in the polymer chain. The proportion of these copolymerizable components in the thermoplastic polyester resin (B) is at most about 20 % by weight, preferably at most about 15 % by weight, more preferably at most about 10 % by weight.

Examples of the thermoplastic polyester resin (B) are, for instance, polyethylene terephthalate, polypropylene terephthalate, polybutylene terephthalate, polyhexamethylene terephthalate, polycyclohexandimethlene terephthalate, polyethylene naphthalate, polybutylene naphthalate, and other aromatic polyester resins.

From the viewpoint that the obtained resin composition is excellent in a balance of physical properties such as moldability, it is preferable that the thermoplastic polyester resin (B) is a polyalkylene terephthalate resin containing at least 80 % by weight, especially at least 85 % by weight, more especially at least 90 % by weight, of alkylene terephthalate units.

It is preferable that the thermoplastic polyester resin (B) has a logarithmic viscosity of 0.30 to 2.00 dl/g, especially 0.40 to 1.80 dl/g, more especially 0.50 to 1.60 dl/g, measured at 25°C in a mixed solvent of phenol/tetrachloroethane=1/1 by weight. If the logarithmic viscosity is less than 0.30 dl/g, the flame resistance and mechanical strength of moldings tend to lower, and if the logarithmic viscosity is more than 2.00 dl/g, the fluidity in molding tends to lower.

The thermoplastic polyester resins (B) may be used alone or in admixture thereof. In the case of using two or more kinds of the resins, how to combine is not limited and, for instance, those having different copolymerization components, those having different molar ratios of the components and/or those having different molecular weights can be arbitrarily combined.

In the present invention, the blending ratio of the polycarbonate resin (A) to the thermoplastic polyester resin (B) [(A)/(B) ratio] is from 99/1 to 50/50 by weight, preferably 95/5 to 55/45 by weight, more preferably 90/10 to 60/40 by weight. If the (A)/(B) ratio is more than 99/1 by weight, the molding processability and solvent resistance of the obtained resin compositions are lowered, and if the (A)/(B) ratio is less than 50/50, the impact strength and flame resistance are lowered.

The organic phosphorus based flame retarder (C) used in the present invention includes a phosphate, a phosphonate, a phosphinate, a phosphine oxide, a phosphite, a phosphonite, a phosphinite, and the like. Examples of the phosphorus based flame retarder (C) are, for instance, trimethyl phosphate, triethyl phosphate, tributyl phosphate, tri(2-ethylhexyl) phosphate, tributoxyethyl phosphate, triphenyl phosphate, tricresyl phosphate, trixylenyl phosphate, tris(isopropylphenyl) phosphate, trinaphthyl phosphate, cresyldiphenyl phosphate, xylenyldiphenyl phosphate, diphenyl(2-ethylhexyl) phosphate, di(isopropylphenyl)phenyl phosphate, phenyldicresyl phosphate, di-2-ethylhexyl phosphate, monoisodecyl phosphate, 2-acryloyloxyethyl acid phosphate, 2-methacryloyloxyethyl acid phosphate, diphenyl-2-acryloyloxyethyl phosphate, diphenyl-2-methacryloyloxy-ethyl phosphate, triphenyl phosphite, trisnonylphenyl phosphite, tristridecyl phosphite, dibutyl hydrogen phosphite, triphenyl phosphine oxide, tricrysyl phosphine oxide, diphenyl methanephosphonate, diethyl phenylphosphonate and other organic phosphorus compounds, and condensed phosphoric acid esters. The organic phosphorus based flame retarders may be used alone or in admixture thereof.

As the organic phosphorus based flame retarder (D), phosphoric acid ester compounds of the formula (I): 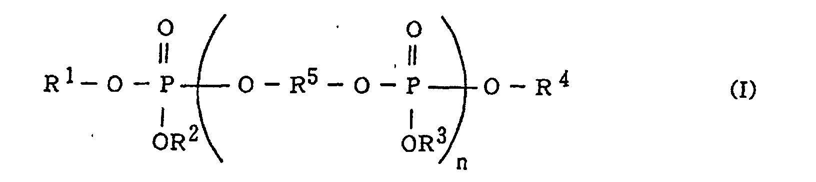 wherein R¹ to R⁴ are a monovalent aromatic or aliphatic group, R⁵ is a bivalent aromatic group, n is 0 to 16, and n groups R³ and n groups R⁵ may be the same or different, respectively, are preferred from the viewpoints that the molding processability can be largely improved, and they are excellent in flame retardancy and are easy to handle. Condensed phosphoric acid esters represented by the formula (I) wherein n is from 1 to 16 are more preferable because of low contamination to metallic portions such as die in molding.

Typical examples of the phosphoric acid ester represented by the formula (I) (n=0) are, for instance, triphenyl phosphate, tricresyl phosphate, trixylenyl phosphate, cresyldiphenyl phosphate, xylenyldiphenyl phosphate and the like.

Typical examples of the condensed phosphoric acid ester shown by the formula (I) are, for instance, a resorcinolbis(diphenyl) phosphate of the formula (II): 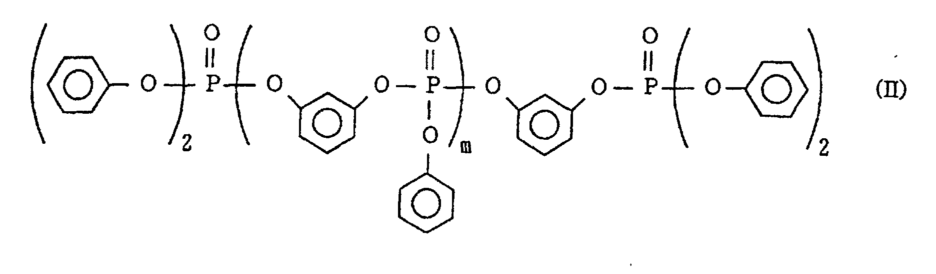 wherein m is from 0 to 15,
a resorcinolbis(di-2, 6-xylyl) phosphate of the formula (III): 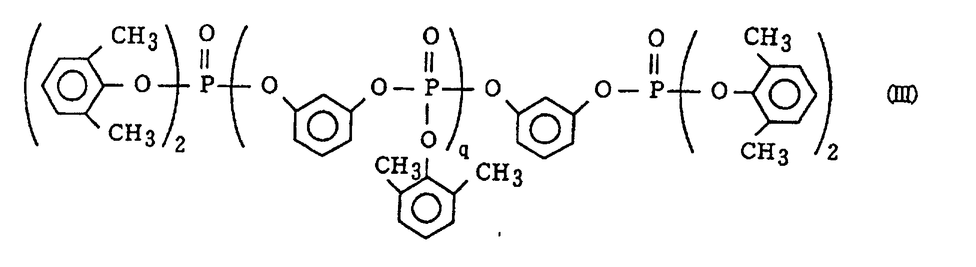 wherein q is from 0 to 15,
a bisphenol A-bis(dicresyl) phosphate of the formula (IV): 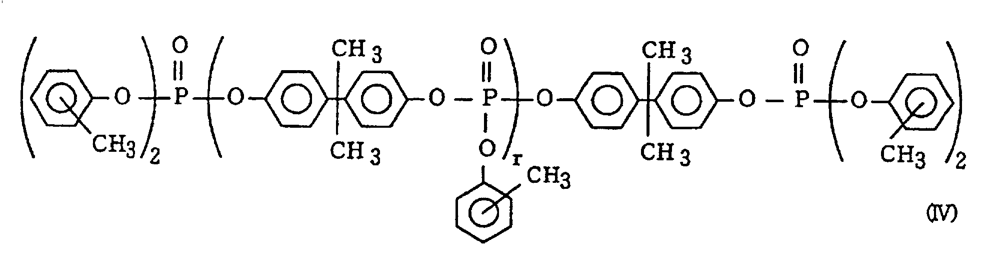 wherein r is from 0 to 15,
a hydroquinonebis(di-2, 6-xylyl) phosphate of the formula (V): 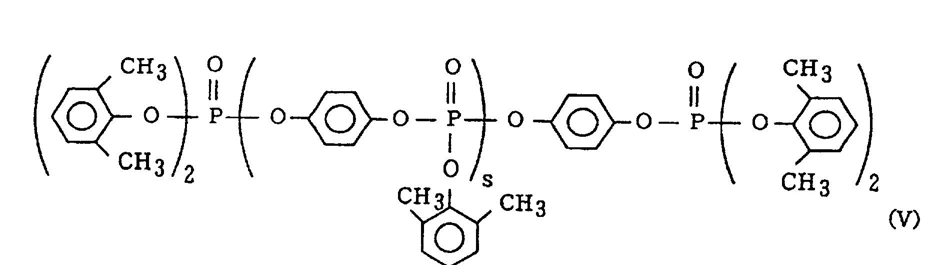 wherein s is from 0 to 15,
and condensation products of these condensed phosphoric acid esters.

The amount of the organic phosphorus based flame retarder (C) is from 0.1 to 30 parts by weight, preferably 0.2 to 25 parts by weight, more preferably 0.3 to 20 parts by weight, per 100 parts by weight of the thermoplastic resin composed of the polycarbonate resin (A) and the thermoplastic polyester resin (B). If the amount of the flame retarder (C) is less than 0.1 part by weight, the effect of improving the flame resistance and molding processability are insufficient, and if the amount is more than 30 parts by weight, the impact resistance, heat resistance and solvent resistance of the obtained moldings tend to lower.

In the present invention, the copolymer (D) comprising units of at least one olefin, units of at least one alkyl (meth)acrylate having a C₁ to C₁₀ alkyl group and units of at least one glycidyl (meth)acrylate is used for the purpose of improving the impact resistance without lowering the heat stability of resin compositions, and of improving the solvent resistance and wet heat resistance.

The copolymer (D) is obtained generally by a radical polymerization of at least one olefin, at least one alkyl (meth)acrylate and at least one glycidyl (meth)acrylate in the presence of a radical polymerization initiator. However, the polymerization method thereof is not limited to this method, but the polymerization can be carried out according to generally known various polymerization methods. The copolymer may be in any form of random copolymer and block copolymer.

Examples of the olefin in the copolymer (D) are, for instance, ethylene, propylene, 1-butene, 1-pentene, and the like. The olefins may be used alone or in admixture thereof. Ethylene is particularly preferred as the olefin.

Also, as the alkyl (meth)acrylate in the copolymer (D), those having an alkyl group with 1 to 10 carbon atoms, preferably at most 8 carbon atoms, more preferably at most 6 carbon atoms, are used. If the number of carbon atoms in the alkyl group is more than 10, the compatibility with the polycarbonate resin and the thermoplastic polyester resin is lowered to result in lowering of the impact resistance improving effect. Examples of the alkyl (meth)acrylate are, for instance, methyl acrylate, ethyl acrylate, n-propyl acrylate, isopropyl acrylate, n-butyl acrylate, t-butyl acrylate, methyl methacrylate, ethyl methacrylate, n-propyl methacrylate, isopropyl methacrylate, n-butyl methacrylate, t-butyl methacrylate, and the like. These may be used alone or in admixture thereof. Methyl acrylate and ethyl acrylate are particularly preferred as the alkyl (meth)acrylate.

Examples of the glycidyl (meth)acrylate in the copolymer (D) are glycidyl acrylate and glycidyl methacrylate. These may be used alone or in admixture thereof. Glycidyl methacrylate is particularly preferred.

The content of the units of at least one olefin in the copolymer (D) is preferably from 40 to 94.9 % by weight, more preferably from 50 to 89 % by weight. The content of the units of at least one alkyl (meth)acrylate in the copolymer (D) is preferably from 5 to 59.9 % by weight, more preferably from 9 to 49 % by weight. The content of the units of at least one glycidyl (meth)acrylate is preferably from 0.1 to 55 % by weight, more preferably from 1 to 41 % by weight. If the content of the alkyl (meth)acrylate units is less than 5 % by weight, the effect of improving the impact resistance is poor, and if the content is more than 59.9 % by weight, the heat stability at the time of melting, e.g. in molding processing, tends to lower. Further, if the content of the glycidyl (meth)acrylate units is less than 0.1 % by weight, the effect of improving the impact resistance is poor, and if the content is more than 55 % by weight, the molding processing of the obtained compositions tends to become difficult.

The melt index (MI) of the copolymer (D) measured at 190°C under 2 kgf loading (according to JIS K 6730) is from 0.2 to 1,000 g/10 minutes, preferably from 0.3 to 500 g/10 minutes, further preferably from 0.5 to 300 g/10 minutes. If the MI value is less than 0.2 g/10 minutes, the molding processability of the obtained compositions tends to lower, and if the MI value is more than 1,000 g/10 minutes, the effect of improving the impact resistance of the obtained compositions tends to lower.

The copolymer (D) may contain units of other copolymerizable monomers. Examples of the other copolymerizable monomers are, for instance, an aromatic vinyl compound such as styrene or α-methylstyrene, an unsaturated nitrile compound such as acrylonitrile or methacrylonitrile, an unsaturated carboxylic acid such as acrylic acid or methacrylic acid and its metal salt such as sodium salt, calcium salt, potassium salt or magnesium salt, a maleimide compound such as n-phenylmaleimide, a diene compound such as butadiene, maleic anhydride, vinyl acetate, and the like. The content of the other copolymerizable monomer units in the copolymer (D) is at most about 30 % by weight.

The copolymers (D) may be used alone or in admixture of those having different monomer components or different MI values.

Also, the copolymers (D) may be used in combination with other polyolefin resin (D'), as occasion demands. Examples of the other polyolefin resins (D') are, for instance, a copolymer comprising units of at least one olefin and units of at least one alkyl (meth)acrylate having a C₁ to C₁₀ alkyl group; a copolymer comprising units of at least one olefin and units of at least one glycidyl (meth)acrylate; a copolymer comprising units of at least one olefin, units of at least one glycidyl (meth)acrylate and units of vinyl acetate; a copolymer comprising units of at least one olefin, units of at least one alkyl (meth)acrylate having a C₁ to C₁₀ alkyl group and units of carbon monoxide; and various other polyolefins. The other polyolefin resins (D') are not limited to those exemplified above.

The amount of the copolymer (D) is from 0.1 to 15 parts by weight, preferably from 0.3 to 12 parts by weight, more preferably from 0.5 to 10 parts by weight, per 100 parts by weight of total of the polycarbonate resin (A) and the thermoplastic polyester resin (B). If the amount of the copolymer (D) is less than 0.1 part by weight, the effects of improving the impact resistance, solvent resistance and wet heat resistance are small. If the amount is more than 15 parts by weight, the molding processing becomes difficult and, also, the heat stability and flame resistance are lowered. In case of using the copolymer (D) in combination with the other polyolefin resin (D'), it is preferable that the total amount of the components (D) and (D') is at most 15 parts by weight.

In the present invention, the fluorine-containing resin and/or silicone (E) can be used for the purpose of further improving the flame resistance.

The fluorine-containing resin is resins containing at least 5 % by weight, preferably at least 10 % by weight, of fluorine atom therein. The fluorine-containing resin may be copolymers of a fluoro monomer used in the production of fluorine-containing resins with a monomer copolymerizable therewith which is included in such an amount as not impairing physical properties such as flame resistance of the obtained moldings. Examples of the fluorine-containing resin are, for instance, polymonofluoroethylene, polydifluoroethylene, poly-trifluoroethylene, polytetrafluoroethylene, tetrafluoroethylene/hexafluoropropylene copolymer, ethylene/tetra-fluoroethylene copolymer, polyvinylidene fluoride, and the like. The fluorine-containing resins may be used alone or in admixture thereof.

The molecular weight of the fluorine-containing resin is preferably from 1000,000 to 20000,000, more preferably 2000,000 to 10000,000.

The fluorine-containing resin can be prepared by known methods such as emulsion polymerization, suspension polymerization, bulk polymerization and solution polymerization.

(Poly)organosiloxane compounds are used as the silicone. Examples thereof are, for instance, a mono-organosiloxane such as dimethylsiloxane or phenylmethylsiloxane; and an organopolysiloxane obtained by polymerizing the organosiloxane, such as polydimethy-siloxane, polyphenylmethylsiloxane or a copolymer thereof. Modified silicones wherein the molecular end of the organopolysiloxanes is substituted by epoxy group, hydroxyl group, carboxyl group, mercapto group or amino group, or substituted by copolymerization with an ether bond-containing compound such as polyether, are also useful as the organopolysiloxane. As the silicone, particularly preferred are polymers having a number average molecular weight of at least 200, especially 1,000 to 5000,000, from the viewpoint that the flame resistance can be further raised. The silicones may be used alone or in admixture thereof.

The state of the silicone is not particularly limited, and the silicones in any form, e.g., in the form of oil, gum, varnish, powder and pellets, can be utilized. Also, in order to make it easy to knead with polycarbonate resin and thermoplastic polyester resin, the silicones may be used in the form of a masterbatch wherein the silicones are previously mixed with these resins.

The amount of the component (E), namely at least one of the fluorine-containing resin and the silicone is from 0.01 to 5 parts by weight, preferably from 0.05 to 4 parts by weight, more preferably from 0.1 to 3 parts by weight, per 100 parts by weight of the total of the polycarbonate resin (A) and the thermoplastic polyester resin (B). If the amount is less than 0.01 part by weight, the effect of improving the flame resistance is small, and if the amount is more than 5 parts by weight, the molding processability and the impact resistance tend to lower.

The flame resistance can be further improved by further incorporating silicate compound (F) into the flame retarded thermoplastic resin composition of the present invention It is also possible to attempt to improve the heat resistance or elasticity by incorporating the silicate compound. Such silicate compounds are typically compounds including a chemical composition of SiO₂ unit. The shape thereof is not particularly limited, and is typically powdery, particulate or granular, needle-like and plate-like forms. The silicate compounds may be natural ones or synthetic ones.

Typical examples of the silicate compound (E) are, for instance, magnesium silicate, aluminum silicate, calcium silicate, talc, mica, wollastonite, kaolin, diatomaceous earth, smectites, and the like. Particularly, mica, talc, kaolin and smectites are preferred from the viewpoints that they have an excellent effect of drastically improving the flame resistance of molded products obtained from the resin composition and, in addition, have excellent effects of suppressing the anisotropy of the molded products and of improving the heat resistance and mechanical strength. The silicate compounds may be used alone or in admixture thereof.

The amount of the silicate compound (F) is from 0.1 to 100 parts by weight, preferably 0.2 to 70 parts by weight, more preferably 0.3 to 50 parts by weight, per 100 parts by weight of the thermoplastic resin composed of the polycarbonate resin (A) and the thermoplastic polyester resin (B). If the amount of the silicate compound (F) is less than 0.1 part by weight, the effect of improving the flame resistance of the obtained moldings is poor and, in addition thereto, the effect of improving the heat resistance and mechanical strength tends to be inferior. If the amount is more than 100 parts by weight, the impact resistance, heat stability and surface property of the obtained moldings are lowered and, moreover, the workability tends to lower such that it becomes difficult to knead with resins in melt-kneading thereof.

The flame retarded thermoplastic resin composition of the present invention may be incorporated with any other thermoplastic or thermosetting resins, e.g., unsaturated polyester resins, polyamide resins, polystyrene resins, rubber-like styrene-based elastomeric copolymers, acrylonitrile/styrenic compound copolymers, elastomer-containing acrylontrile/styrenic compound copolymers, polyalkyl (meth)acrylate resins, polyphenylenemaleimide resins, polyphenylene sulfide resins, polyphenylene ether resins, polyacetal resins and polysulfone resins, so long as the properties of the composition are not impaired. These may be used alone or in admixture thereof.

Also, in order to further raise the performances of the flame retarded thermoplastic resin compositions of the present invention, preferably one or more of antioxidants such as phenol antioxidants or thioether antioxidants and heat stabilizers such as phosphorus stabilizers are incorporated into the compositions. Further, the compositions of the present invention may contain one or more of known additives, as occasion demands, e.g., stabilizer, lubricant, releasing agent, plasticizer, flame retarders other than phosphorus based flame retarders, assistant for flame retardation, ultraviolet absorber, light stabilizer, pigment, dye, antistatic agent, conductivity-imparting agent, dispersing agent, compatibilizer, antibacterial agent and the like.

The method for preparing the compositions of the present invention is not particularly limited and, for instance, the compositions can be prepared by such a method that after drying the above-mentioned components and other additives and resins, they are melt-kneaded by a melt-kneader such as a single screw extruder or twin screw extruder. Also, in case that materials to be incorporated are liquid, they can be added to an extruder in the middle by using a liquid feed pump or the like.

The method of the molding processing of the compositions of the present invention is not particularly limited, and molding methods generally used for thermoplastic resins are adoptable, e.g., injection molding, blow molding, extrusion, vacuum molding, press molding and calendering.

The compositions of the present invention are more specifically explained by means of examples, but it is to be understood that the present invention is not limited thereto. In the following explanation, all parts and % are by weight unless otherwise noted.

The ingredients used in Examples and Comparative Examples are shown below.
Polycarbonate resin (A)
   - PC(A1):: Bisphenol A polycarbonate resin having a viscosity average molecular weight of about 23,500
   - PC(A2):: Bisphenol A polycarbonate resin having a viscosity average molecular weight of about 26,500
Thermoplastic polyester resin (B)
   - PET(B1):: Polyethylene terephthalate resin having a logarithmic viscosity of about 0.75 dl/g
   - PET(B2):: Polyethylene terephthalate resin having a logarithmic viscosity of 0.6 dl/g
   - PBT(B3):: Polybutylene terephthalate resin having a logarithmic viscosity of 0.85 dl/g
Organic phosphorus based flame retarder (C)
   - C1:: Bisphenol A-bis(dicresyl) phosphate
   - C2:: Triphenyl phosphate
   - C3:: Tri(2,6-xylyl) phosphate
   - C4:: Resorcinolbis(di-2,6-xylyl) phosphate
   - C5:: Hydroquinonebis(di-2,6-xylyl) phosphate
   - C6:: Resorcinolbis(diphenyl) phosphate
Copolymer (D)
   - E/MA/GMA(D1):: Ethylene/methyl acrylate/glycidyl methacrylate copolymer commercially available under the trade mark "Bondfast 7M" made by Sumitomo Chemical Co., Ltd., methyl acrylate content 30 %, glycidyl methacrylate content 6 %, MI value 9 g/10 minutes
   - E/MA/GMA(D2):: Ethylene/methyl acrylate/glycidyl methacrylate copolymer commercially available under the trade mark "Bondfast 20M" made by Sumitomo Chemical Co., Ltd., methyl acrylate content 30 %, glycidyl methacrylate content 6 %, MI value 20 g/10 minutes
Fluorine-containing resin (E)
   - PTFE(E1):: Polytetrafluoroethylene commercially available under the trade mark "Polyflon FA-500" made by Daikin Industries, Ltd.
   - Silicone(E2):: Trade mark "Si powder DC4-7051" made by Toroy Dow Corping Sili
Silicate compound (F)
   - Mica(F1):: Trade mark "A-21S" made by Yamaguchi Unmo Kabushiki Kaisha
   - Talc(F2):: Trade mark "Talcan powder PK" made by Hayashi Talc Kabushiki Kaisha
Other polyolefin resin (D')
   - EEA(D'1):: Ethylene/ethyl acrylate copolymer commercially available under the trade mark "EVAFLEX-EEA A709" made by Du Pont-Mitsui Polychemicals Company, Ltd., ethyl acrylate content 35 %, MI value 25 g/10 minutes
   - E/GMA(D'2):: Ethylene/glycidyl methacrylate copolymer commercially available under the trade mark "Bondfast E" mede by Sumitomo Chemical Co., Ltd., glycidyl methacrylate content 12 %, MI value 3 g/10 minutes
   - PE(D'3):: Polyethylene resin commercially available under the trade mark "Moretech 0168N" made by Idemitsu Petrochemical Kabushiki Kaisha
Other additives
   - HP-10:: Phosphite stabilizer (trade mark: Adekastab HP-10, product of Asahi Denka Kogyo K.K.)
   - AO-60:: Phenol stabilizer (trade mark: Adekastab AO-60, product of Asahi Denka Kogyo K.K.)
   - S-RP:: Stabilized red phosphorus the surface of which is coated with phenol resin, commercially available under the trade mark "Norvaexcell 140" made by Rinkagaku kogyo Kabushiki Kaisha
   - MBS:: Graft copolymer of butadiene rubber, methyl methacrylate and styrene (MBS rubber) commercially available under the trade mark "Kaneace M-511" made by Kaneka Corporation

   - ABS resin:: A mixture of 20 % of a grafted rubber composed of 11 % acrylonitrile, 57 % butadiene and 32 % styrene with 80 % of a copolymer composed of 25 % acrylonitrile, 35 % α-methylstyrene and 40 % styrene

In the Examples and Comparative Examples, evaluation of resin compositions were made by the following methods.

### Preparation of test specimens

After drying obtained pellets at 100°C for 4 hours, bar specimens having a thickness of 1.6 mm, 2.5 mm and 3.2 mm (width 12 mm, length 127 mm), ASTM No. 1 dumbbell specimens having a thickness of 3.2 mm and flat plate specimens having a size of 150 mm × 150 mm × 2.5 mm thickness were prepared from the pellets by a 150 t injection molding machine at a cylinder temperature of 270°C and a mold temperature of 50°C, and were used for the following tests.

### Flame resistance

The flame resistance of 1.6 mm thick bar was evaluated by V test according to UL-94 standards. With respect to resin compositions evaluated as V-O in this test, the flame resistance was further evaluated by 5V test according to UL-94 standards using 2.5 mm thick bar specimens and flat plate specimens of 150 mm × 150 mm × 2.5 mm.

### Impact resistance

Using 3.2 mm thick bar specimens, notched Izod impact strength was measured at 23°C according to ASTM D-256.

### Solvent resistance

(1) A 1 % flexural strain was applied to 3.2 mm thick bar specimens, and a gasoline (regular gasoline made by Nippon Oil Company, Ltd.) was applied to the test specimens. The specimens were allowed to stand at 23°C for 48 hours.
(2) A 1 % flexural strain was applied to 3.2 mm thick bar specimens. The specimens were coated with a salad oil, and allowed to stand for 24 hours in an oven kept at 80°C.
(3) A 1 % flexural strain was applied to 3.2 mm thick bar specimens. Dioctyl phthalate (reagent) was applied to the test specimens, and the specimens were allowed to stand for 24 hours in an oven kept at 80°C.

Change in surface appearance of the specimens was then visually observed and evaluation was made according to the following criteria.
○: No change in appearance in all tests.
Δ: Generation of cracks in one or two tests of the above three tests.
×: Generation of cracks in all tests.

### Heat stability

After drying obtained pellets at 100°C for 4 hours, the pellets were formed by a 75 t injection molding machine at a cylinder temperature of 310°C, a mold temperature of 50°C and a molding cycle of 3 minutes to give 20 plate-like moldings having a size of 150 mm × 150 mm x 2.5 mm. The surface appearance of the obtained ten plates from 11th to 20th plates was visually evaluated according to the following criteria.
○: Good appearance
Δ: Appearance defect such as flash, silver streak, burning or discoloration being observed at a part of the molding
×: Appearance defect such as flash, silver streak, burning or discoloration being observed in the entire surface of the molding

### Wet heat resistance

ASTM No. 1 test specimens were treated at 65°C and 85 % in humidity for 1,000 hours. Wth respet to the specimens before and after the treatment, the tensile test was made at 23°C and a rate of tension of 10 mm/minute according to ASTM D-638. The rate of retention of tensile strength was calculated from the difference in tensile strength measured before and after the treatment. The larger the rate of retension, the better the wet heat resistance.

### Molding processability

Melt index value (unit: g/10 minutes) was measured at 280°C and a load of 2,160 g according to JIS K-6730.

### Example 1

There were dry-blended 90 parts of a bisphenol A type polycarbonate resin PC(A1) 10 parts of a polyethylene terephthalate resin PET(B1) polymerized using a germanium dioxide, 4 parts of an ethylene/methyl acrylate/glycidyl methacrylate copolymer E/MA/GMA(D1), 0.1 part of a phosphite stabilizer HP-10 and 0.1 part of a phenol stabilizer AO-60. The resulting mixture was fed to a hopper of a twin-screw extruder (TEX44 made by The Japan Steel Works, Ltd.) equipped with a vent and set at a cylinder temperature of 280°C. Further, 7.5 parts of organic phosphorus flame retarder C1 was added to the middle part of the extruder from a liquid feed pump thereof. They were melt-kneaded to give a resin composition in the form of pellets. The results of evaluation of the obtained composition are shown in Table 1.

### Examples 2 to 18 and Comparative Examples 1 to 10

According to the recipes shown in Tables 1 to 3, resin compositions were prepared and evaluated in the same manner as in Example 1.

Organic phosphorus flame retarders (C) which were liquid at ordinary temperature were added from the liquid feed pump of the twin-screw extruder, and those which were solid at ordinary temperature were added from the hopper of the extruder.

Also, with respect to only the composition of Comparative Example 4, the processing temperature for the preparation of test specimens was raised higher by 30°C than that for other Examples, since the molding processing was difficult. The results of evaluation are shown in Tables 1 to 3.

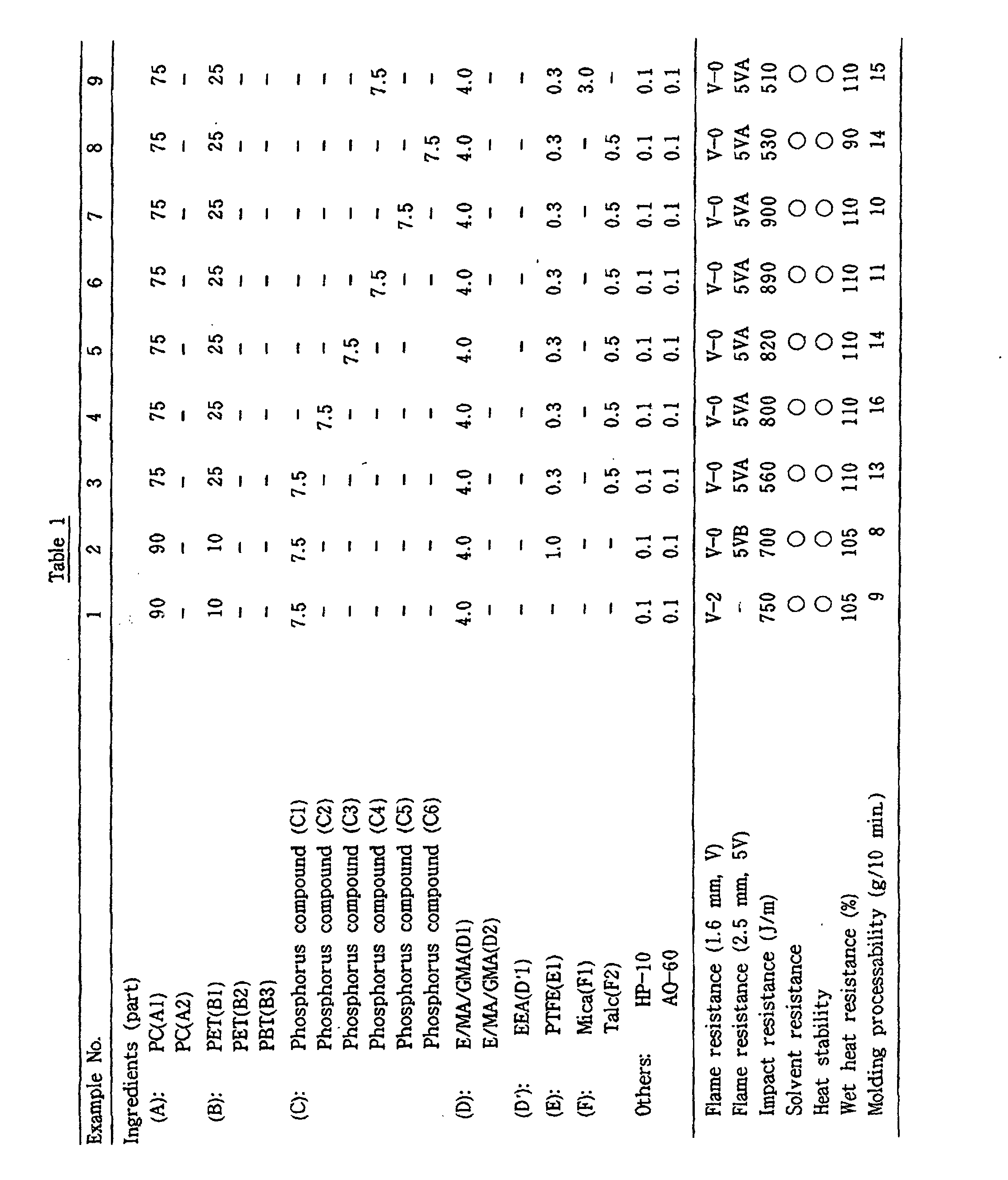

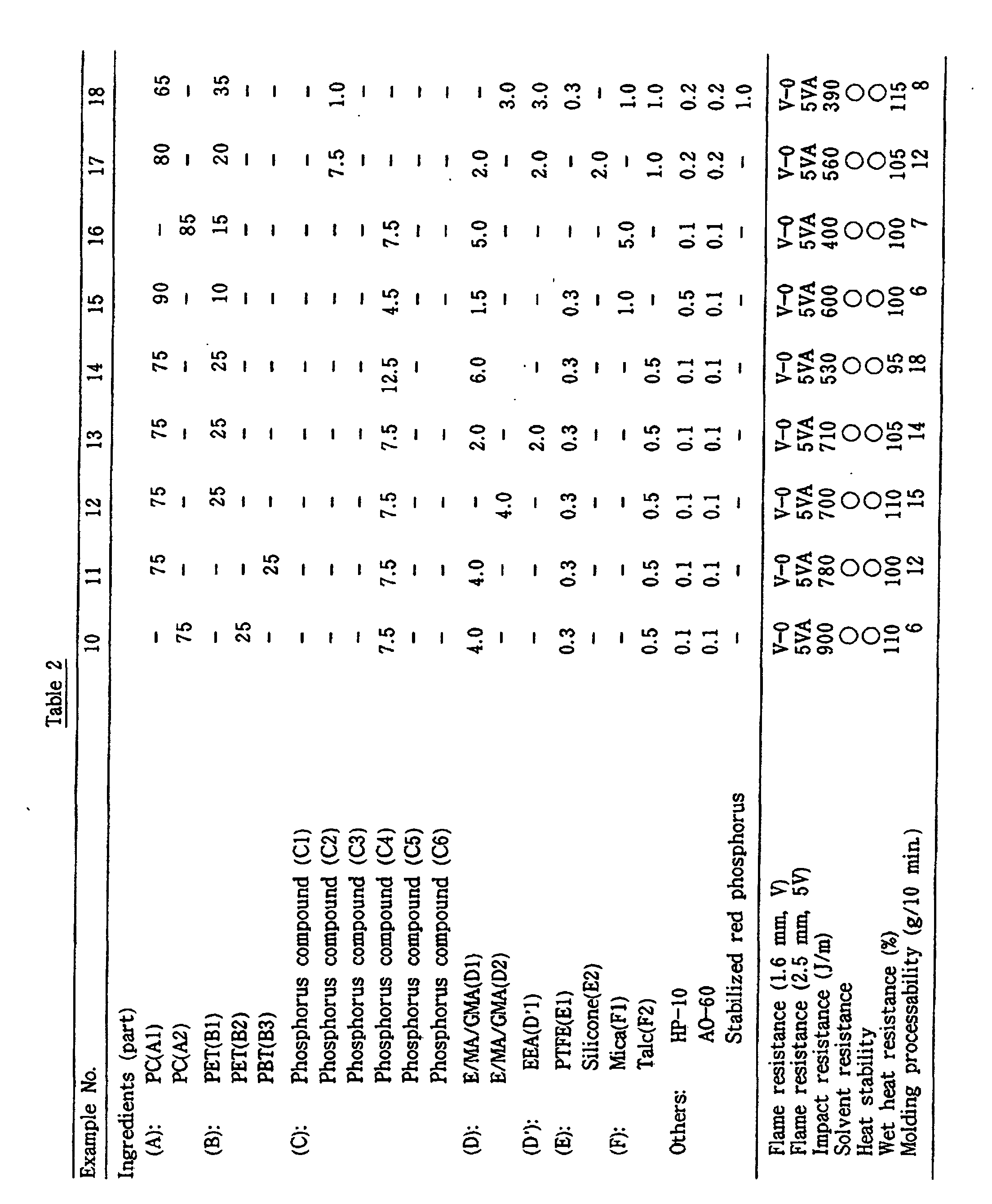

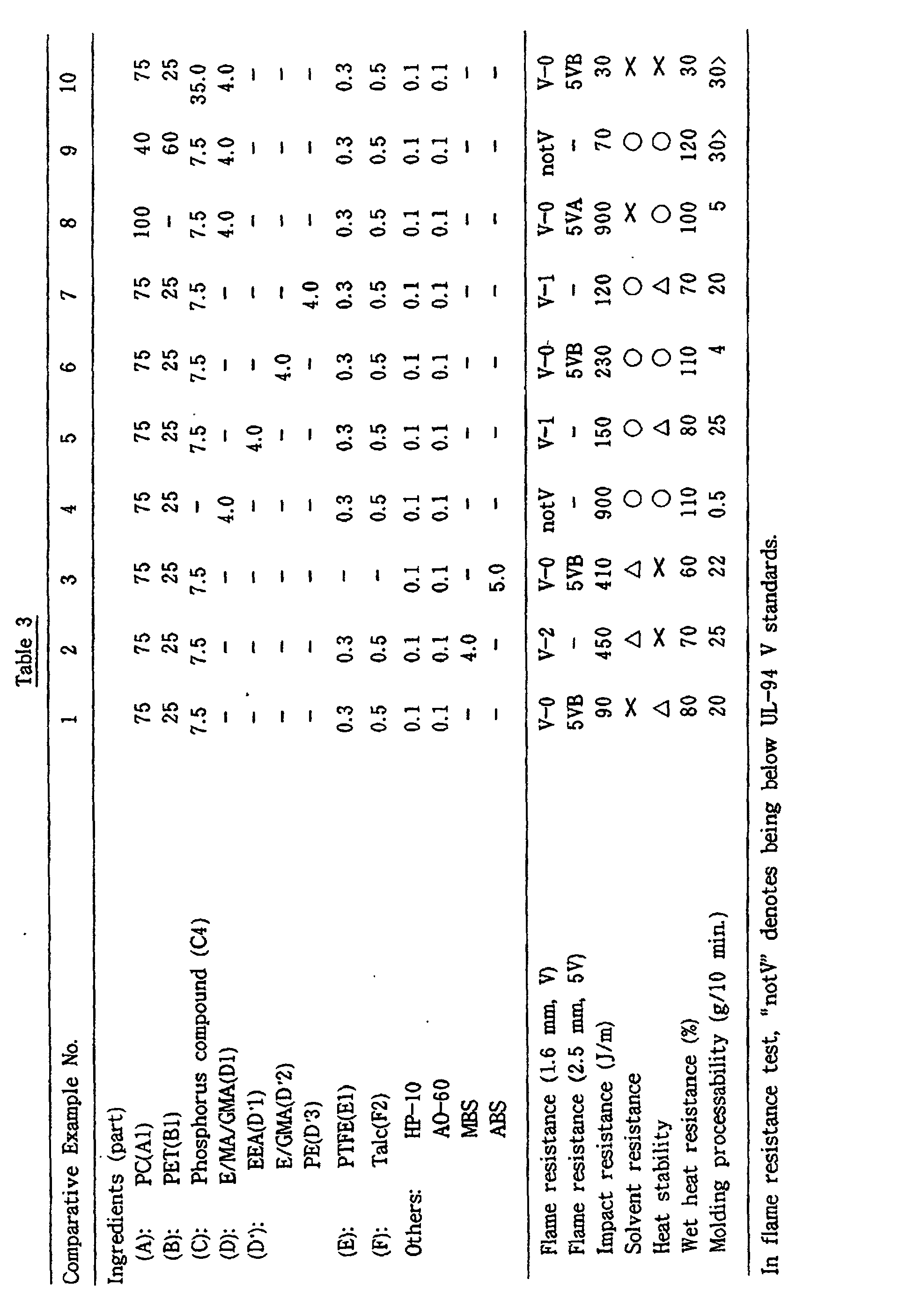

From Tables 1 to 3, it is found that since the copolymer (D) is not used in Comparative Example 1, the impact resistance, solvent resistance and wet heat resistance are remarkably lowered and, in addition, the heat stability is also somewhat deteriorated. In Comparative Examples 2 and 3, a grafted rubber or a resin containing a grafted rubber is used instead of the copolymer (D), but the solvent resistance and wet heat resistance are lowered like Comparative Example 1 and, moreover, the heat is remarkably deteriorated. Further, the flame resistance is on a lower level as compared with the compositions of the Examples. In Comparative Example 4, since no organic phosphorus based flame retarder (C) is used, the flame resistance is not obtained and, in addition, the fluidity is remarkably lowered, so molding processing such as injection molding is very difficult and the composition cannot be practically used. In Comparative Examples 5 to 7, polymers similar to the copolymer (D) were used instead of the copolymer (D), but the flame resistance of the compositions thereof are all lower than the compositions of the Examples. In Comparative Example 8, since no thermoplastic polyester resin (B) is used, the solvent resistance and molding processability are lowered. In Comparative Example 9, since the (A)/(B) ratio of the polycarbonate resin (A) to the thermoplastic polyester resin (B) is 40/60, the impact resistance and flame resistance are inferior. Since the composition of Comparative Example 10 contains a large amount of organic phosphorus based flame retarder, the impact resistance, solvent resistance, heat stability and wet heat resistance are lowered.

Thus, as apparent from comparison between the compositions of the Examples shown in Tables 1 and 2 and the compositions of the Comparative Examples shown in Table 3, it is found that the compositions of the present invention are all superior in impact resistance, solvent resistance, wet heat resistance and heat stability as well as flame resistance.

### INDUSTRIAL APPLICABILITY

The flame retarded thermoplastic resin compositions of the present invention are provided with a high degree of flame resistance without using compounds containing chlorine or bromine and, in addition, are excellent in impact resistance, solvent resistance, wet heat resistance, heat stability and molding processability and, therefore, are useful for various purposes, including household electric appliances, office automation equipment parts, audio-visual equipment parts and automobile parts.

## Claims

1. A flame retarded thermoplastic resin composition comprising:
a thermoplastic resin comprising (A) a polycarbonate resin and (B) a thermoplastic polyester resin in an (A)/(B) ratio of 99/1 to 50/50 by weight,
(C) 0.1 to 30 parts by weight of an organic phosphorus based flame retarder, and
(D) 0.1 to 15 parts by weight of a copolymer comprising units of at least one olefin, units of at least one alkyl (meth)acrylate having a C₁ to C₁₀ alkyl group and units of at least one glycidyl (meth)acrylate, respectively, per 100 parts by weight of said thermoplastic resin.

2. The composition of Claim 1, which further contains 0.01 to 5 parts by weight of (E) at least one of a fluorine-containing resin and a silicone per 100 parts by weight of said thermoplastic resin comprising the components (A) and (B).

3. The composition of Claim 1 or 2, which further contains 0.1 to 100 parts by weight of (F) a silicate compound per 100 parts by weight of said thermoplastic resin comprising the components (A) and (B).

4. The composition of any of Claims 1 to 3, wherein said organic phosphorus based flame retarder (C) is a phophoric acid ester of the formula (I): 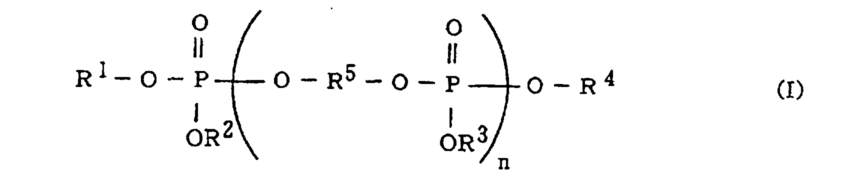 wherein R¹ to R⁴ are a monovalent aromatic or aliphatic group, R⁵ is a bivalent aromatic group, n is 0 to 16, and n groups R³ and n groups R⁵ may be the same or different, respectively.

5. The composition of any of Claims 1 to 4, wherein said copolymer (D) is a copolymer comprising 40 to 94.9 % by weight of units of at least one olefin, 5 to 59.9 % by weight of units of at least one alkyl (meth)acrylate having a C₁ to C₁₀ alkyl group and 0.1 to 55 % by weight of units of at least one glycidyl (meth)acrylate.

6. The composition of any of Claims 1 to 5, wherein said thermoplastic polyester resin (B) is a polyalkylene terephthalate resin containing at least 80 % by weight of alkylene terephthalate units.

## Patentansprüche

1. Flammverzögernde thermoplastische Harzzusammensetzung, umfassend:
ein thermoplastisches Harz, welches (A) ein Polycarbonatharz und (B) ein thermoplastisches Polyesterharz in einem (A)/(B) Gewichtsverhältnis von 99/1 bis 50/50 umfasst,
(C) 0,1 bis 30 Gewichtsteile eines organischen, auf Phosphor basierenden Flammverzögerers, und
(D) 0,1 bis 15 Gewichtsteile eines Copolymers, welches Einheiten mindestens eines Olefins, Einheiten mindestens eines Alkyl(meth)acrylats mit einem C₁ bis C₁₀ Alkylrest bzw. Einheiten mindestens eines Glycidyl(meth)acyylats umfasst, pro 100 Gewichtsteile des thermoplastischen Harzes.

2. Zusammensetzung gemäß Anspruch 1, weiterhin enthaltend 0,01 bis 5 Gewichtsteile an (E) mindestens eines Bestandteils aus einem Fluor enthaltenden Harz und einem Silikon, pro 100 Gewichtsteile des thermoplastischen Harzes, welches die Komponenten (A) und (B) umfasst.

3. Zusammensetzung gemäß Anspruch 1 oder 2, weiterhin enthaltend 0,1 bis 100 Gewichtsteile an (F) einer Silicatverbindung, pro 100 Gewichtsteile des thermoplastischen Harzes, welches die Komponenten (A) und (B) umfasst.

4. Zusammensetzung gemäß einem der Ansprüche 1 bis 3, wobei der organische, auf Phosphor basierende Flammverzögerer (C) ein Phosphorsäureester der Formel (I) ist: 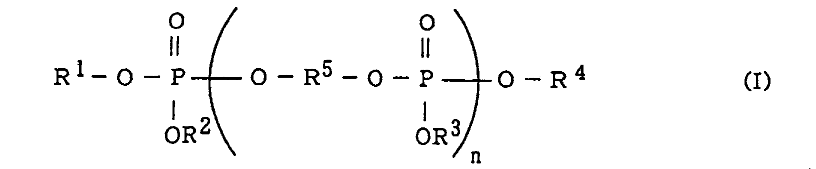 wobei R¹ bis R⁴ ein einwertiger aromatischer oder alliphatischer Rest sind, R⁵ ein zweiwertiger aromatischer Rest ist, n gleich 0 bis 16 ist und n Reste R³ bzw. n Reste R⁵ gleich oder verschieden sein können.

5. Zusammensetzung gemäß einem der Ansprüche 1 bis 4, wobei das Copolymer (D) ein Copolymer ist, welches 40 bis 94,9 Gew.-% an Einheiten mindestens eines Olefins, 5 bis 59,9 Gew.-% an Einheiten mindestens eines Alkyl(meth)acrylats mit einem C₁ bis C₁₀ Alkylrest und 0,1 bis 55 Gew.-% an Einheiten mindestens eines Glycidyl(meth)acrylats umfasst.

6. Zusammensetzung gemäß einem der Ansprüche 1 bis 5, wobei das thermoplastische Polyesterharz (B) ein Polyalkylenterephthalatharz ist, welches mindestens 80 Gew.-% an Alkylenterephthalateinheiten enthält.

## Revendications

1. Composition ignifuge de résine thermoplastique comprenant :
une résine thermoplastique comprenant (A) une résine de polycarbonate et (B) une résine de polyester thermoplastique avec un rapport (A)/(B) de 99/1 à 50/50 en poids,
(C) 0,1 à 30 parts en poids d'un retardateur de flammes organique à base de phosphore, et
(D) 0,1 à 15 parts en poids d'un copolymère comprenant des unités d'au moins une oléfine, des unités d'au moins un (méth)acrylate d'alkyle ayant un groupe alkyle C₁ à C₁₀ et des unités d'au moins un (méth)acrylate de glycidyle, respectivement, par 100 parts en poids de ladite résine thermoplastique.

2. Composition selon la revendication 1, contenant en outre 0,01 à 5 parts en poids de (E) au moins l'une des substances suivantes, une résine contenant de la fluorine ou une silicone, par 100 parts en poids de ladite résine thermoplastique comprenant les composants (A) et (B).

3. Composition selon la revendication 1 ou 2, contenant en outre 0,1 à 100 parts en poids de (F) un composé de silicate par 100 parts en poids de ladite résine thermoplastique comprenant les composants (A) et (B).

4. Composition selon l'une quelconque des revendications 1 à 3, dans laquelle ledit retardateur de flammes organique à base de phosphore (C) est un ester d'acide phosphorique de formule (I) : 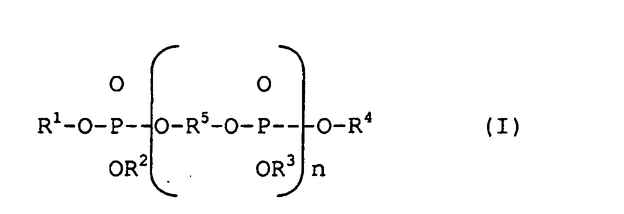 dans laquelle R¹ à R⁴ sont un groupe aromatique ou aliphatique monovalent, R⁵ est un groupe aromatique bivalent, n est le chiffre 0 à 16, et n groupes R³ et n groupes R⁵ peuvent être les mêmes ou être différents, respectivement.

5. Composition selon l'une quelconque des revendications 1 à 4, dans laquelle ledit copolymère (D) est un copolymère comprenant 40 à 94,9 % en poids d'unités d'au moins une oléfine, 5 à 59,9 % en poids d'unités d'au moins un (méth)acrylate d'alkyle ayant un groupe alkyle C₁ à C₁₀ et 0,1 à 55 % en poids d'unités d'au moins un (méth)acrylate de glycidyle.

6. Composition selon l'une quelconque des revendications 1 à 5, dans laquelle ladite résine de polyester thermoplastique (B) est une résine de téréphthalate de polyalkylène contenant au moins 80 % en poids d'unités de téréphthalate d'alkylène.
